# EUROPEAN PATENT APPLICATION

(11) **EP 2 669 308 A1**
(43) Date of publication of application: **04.12.2013**
(21) Application number: 12170578.4
(22) Date of filing: 01.06.2012
(51) Int. Cl.: C08G 59/04, C08G 59/06, C08G 59/02

(54) **Process for manufacturing an epoxy resin**

(71) Applicant: SOLVAY SA, 1120 Bruxelles (BE)
(72) Inventor: Gilbeau, Patrick, 7090 BRAINE-LE-COMTE (BE)
(74) Representative: Vande Gucht, Anne

(57) **Abstract**

Process for manufacturing an epoxy resin by reaction of dichloropropanol, with a compound containing at least one active hydrogen atom, and a basic agent, in order to produce the epoxy resin and a salt, the reaction being carried out in a reaction mixture, the process further comprising submitting, during the reaction, at least one fraction of the reaction mixture to a treatment comprising at least one liquid-liquid phase separation.

## Description

The present invention relates to a process for manufacturing an epoxy resin.

The present invention relates more specifically to a process for manufacturing an epoxy resin, in particular by using dichloropropanol as starting material.

Epoxy resins may be used in "coating" applications or "structural" applications.

"Coating" applications may be found in the marine field (corrosion-resistant coating for boats, for example), in the field of metal containers (cans for food use, for example), in the coil coating field, and in the field of coatings for motor vehicles, to name but a few of them.

"Structural" applications may be found in the field of composites (reinforcing fibers based on glass, boron or graphite for example), in the civil engineering field, in the fields of floor coverings, of construction, of electrical laminates (printed circuits), of electrical and electronic applications (transformers and insulators, for example), of adhesives, and of tooling (prototypes and moulds, for example), to name but a few of them.

Epoxy resins are industrially obtained by using epichlorohydrin as starting material and epichlorohydrin is industrially obtained in a prior separate step by dehydrochlorination of dichloropropanol.

International application WO 2005/054167 filed under the name of SOLVAY Societe Anonyme discloses the use of dichloropropanol as starting material for producing epoxy resins in one single step. While such process is simple, opportunities for improvement remain for improving the productivity of the process.

The invention therefore relates to a process for manufacturing an epoxy resin by reaction of dichloropropanol, with a compound containing at least one active hydrogen atom, and a basic agent, in order to produce the epoxy resin and a salt, the reaction being carried out in a reaction mixture, the process further comprising submitting, during the reaction, at least one fraction of the reaction mixture to a treatment comprising at least one liquid-liquid phase separation.

One of the essential features of the present invention lies in the use of at least one liquid-liquid phase separation during the reaction. This operation presents the following advantages :
■ easy removal of a part of the salt which is generated by the reaction ;
■ decrease of the viscosity of the reaction medium during the reaction without the use of an external solvent ;
■ decrease of the reaction time ;
■ less organics in the salt ;
■ higher epoxy index of the resin.

Without willing to be bound by any theory, it is believed that the use of at least one liquid-liquid phase separation during the reaction allows the reaction to proceed more efficiently. It is indeed believed that operating according to this feature has the advantage of removing the major part of the produced salt before optimizing the reaction conditions for the dehydrochlorination of the epoxy resin chlorohydrin intermediates into the epoxy resin, while reducing the hydrolysis of the epoxy resin, and of the possibly in situ formed epichlorohydrin, in the reaction mixture.

That process could compete with the classical process for making epoxy resin while avoiding investing in a separate industrial production of epichlorohydrin, sparing the associated investment costs.

In the process according to the invention, the expression "epoxy resin" is understood to mean a monomer or a polymer, the chemical formula of which contains at least one 2,3-epoxypropyloxy group. The epoxy resin is preferably a polymer.

Examples of monomers are for instance, monoglycidyl ethers, polyglycidyl ethers, or a mixture thereof. The polyglycidyl ether can be a diglycidyl ether, like the diglycidyl ether of bisphenol A (DGEBA) or the diglycidyl ether of isosorbide (diglycidylether of 1,4:3,6-dianhydro-D-sorbitol) for instance.

The term "polymer" is understood to mean molecules comprising several units joined to one another by covalent bonds, often in a repeating manner, these units being referred to as repeating units. The number of repeating units is greater than zero. A polymer contains at least one type of repeating unit. When the polymer contains only a single type of repeating unit, it is known as a homopolymer. When the polymer contains more than a single type of repeating unit, it is known as a copolymer. The copolymer may be of statistical, alternating or block type, as described in "Polymer Science Dictionary, M.S.M., Elsevier Applied Science, London and New York, 1989, page 86".

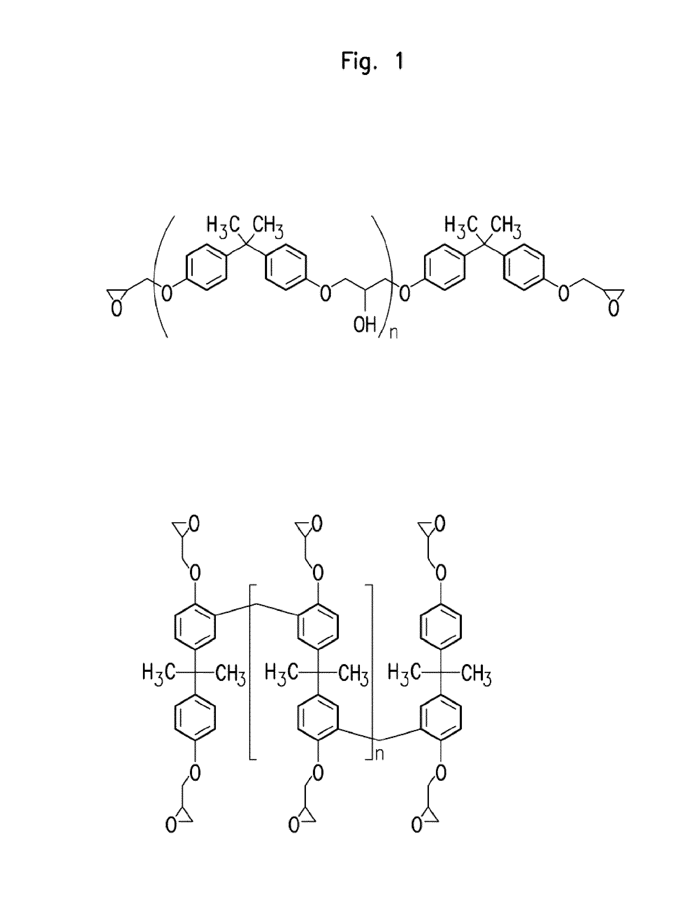

Examples of chemical formulae of epoxy resins are presented in Figure 1, when n is higher than or equal to zero and preferably higher than zero.

In the process according to the invention, the epoxy resin is preferably selected from the group consisting of Type I Grade 1 Classes A to H, Type II Grade 1 Classes A to F and Type VI Grade 1 Class A resins, as defined in the ASTM D 1763 - 00 (2005) standard entitled "Standard Specifications for Epoxy Resins", and any mixture thereof.

In the process according to the invention, the epoxy resin is more preferably a liquid epoxy resin. The expression "liquid epoxy resin" is understood to mean Type I Grade 1 Classes A and B, Type II Grade 1 Classes A, B and C, Type IV Grade 1 Classes A to D, Type V Grade 1 Classes A and B and Type VI Grade 1 Class A resins, as defined in the ASTM D 1763 - 00 (2005) standard entitled "Standard Specifications for Epoxy Resins".

In the process according to the invention, by dichloropropanol, one intends to denote anyone of 1,3-dichloropropane-2-ol, 2,3-dichloropropane-1-ol, and mixture thereof. Mixtures consisting essentially of 1,3-dichloropropane-2-ol and 2,3-dichloropropane-1-ol are preferred. In the mixture of 1,3-dichloropropane-2-ol and 2,3-dichloropropane-1-ol, the 1,3-dichloro-2-propanol content with respect to the total content of the two dichloropropanol isomers is preferably higher than or equal to 100 g/kg, yet preferably higher than or equal to 300 g/kg, still preferably higher than or equal to at least 400 g/kg, more preferably higher than or equal to 750 g/kg, still more preferably higher than or equal to 800 g/kg, yet more preferably higher than or equal to 900 g/kg, and most preferably higher than or equal to 920 g/kg. This content of 1,3-dichloro-2-propanol in the mixture is generally at most 990 g/kg and usually at most 960 g/kg. Contents of 925, 930, 935, 940, 945, 950 or 955 g/kg are particularly convenient. It is also possible to use a dichloropropanol composed essentially of 1,3-dichloro-2-propanol.

In the process according to the invention, the dichloropropanol may be derived from several processes such as, for example, the allyl chloride hypochlorination process, the allyl alcohol chlorination process, the glycerol hydrochlorination process, the glycerol monochlorohydrin hydrochlorination process, the epichlorohydrin hydrochlorination process, the 2,3-dichloropropionaldehyde hydrogenation process as described in documents WO 1997/48667, US 6,350,922 and US 5,744,655, the 1,2-dichlorethylene hydroformylation process as described in document WO 2005/116004, the 1,3-dichloroacetone hydrogenation process as described in documents WO 2005/097722 and WO 2003/064357. 2,3-dichloropropionaldehyde may itself be obtained by chlorination of acrolein and/or hydroformylation of 1,2-dichloroethylene as described in documents US 2,860,146 and WO 2005/116004. 1,3-dichloroacetone may itself be obtained by chlorination of acetone and/or by bromine/chlorine exchange starting from 1,3-dibromoacetone as described in Applications WO 2005/097722 and WO 2005/115954. Acrolein may be obtained by selective oxidation of propylene. 1,2-dichloroethylene may be a by-product of the synthesis of vinyl chloride starting from ethane and/or be obtained by chlorination of acetylene. Acetylene may be obtained by conventional processes such as hydrolysis of calcium carbide and/or pyrolysis of hydrocarbons, crude oil and even coal, such as described in "Industrial Organic Chemistry, Third, Completely Revised Edition, VCH, 1997, pp. 93-98". 1,3-dibromoacetone may be obtained by bromination of acetone, as described in document WO 2005/115954. Acetone may itself be obtained by conventional processes, such as, for example, oxidation of propylene, dehydrogenation of isopropanol and/or decomposition of cumene hydroperoxide, as described in "Industrial Organic Chemistry, Third, Completely Revised Edition, VCH, 1997, pp. 276-277 and 347-355".

In the process according to the invention, at least one part of the dichloropropanol is preferably obtained by reaction between glycerol and a chlorinating agent and/or by reaction between allyl chloride and a hypochlorinating agent and/or by reaction between allyl alcohol and a chlorinating agent and/or by reaction between 2,3-dichloropropionaldehyde and a hydrogenating agent and/or by reaction between 1,2-dichloroethylene and a hydroformylating agent and/or by reaction between 1,3-dichloroacetone and a hydrogenating agent.

In the process according to the invention, the dichloropropanol is preferably obtained by reaction between glycerol and a chlorinating agent and/or by reaction between allyl chloride and a hypochlorinating agent, and more preferably by reaction between glycerol and a chlorinating agent as described in Patent Applications WO 2005/054167, WO 2006/100311, WO 2006/100312, WO 2006/100313, WO 2006/100314, WO 2006/100315, WO 2006/100316, WO 2006/100317, WO 2006/106153, WO 2007/054505, WO 2006/100318, WO 2006/100319, WO 2006/100320, WO 2006/106154, WO 2006/106155, WO 2007/144335, WO 2008/107468, WO 2008/101866, WO 2008/145729, WO 2008/110588, WO 2009/000773, WO 2009/043796, WO 2009/121853, WO 2009/077528, WO 2010/066660, WO 2010/029039 and WO 2010/029153, filed in the name of SOLVAY, the contents of which are incorporated herein by reference.

In the process according to the invention, when at least one part of the dichloropropanol is obtained by reaction between glycerol and a chlorinating agent, the chlorinating agent preferably contains hydrogen chloride such as described in Patent Application WO 2005/054167 by Solvay SA. The hydrogen chloride may be in the form of gas or an aqueous solution of hydrogen chloride or a mixture of the two, preferably in the form of gas or a mixture of gas and an aqueous solution of hydrogen chloride. Glycerol may be obtained from fossil or renewable raw materials. It is preferred to use glycerol obtained from renewable materials. A glycerol which is particularly suitable may be obtained during the conversions of fats or oils of vegetable or animal origin, such as saponification, transesterification or hydrolysis reactions. A particularly suitable glycerol may be obtained during the conversion of animal fats. Another particularly suitable glycerol may be obtained during the manufacture of biodiesel. Another particularly suitable glycerol may be obtained during the fatty acid manufacture. Another particularly suitable glycerol may be obtained during the fatty alcohols manufacture.

In the process according to the invention, the dichloropropanol has preferably been obtained by hydrochlorination of glycerol obtained from renewable raw materials.

In the process according to the invention, the glycerol generally contains nitrogen compounds, usually at least one nitrogen compound, as described in Application WO 2009/077528 in the name of SOLVAY SA, from page 1, line 31, to page 3, line 24, and the content of which is incorporated here by reference. The nitrogen compounds can be organic nitrogen compounds or inorganic nitrogen compounds.

The organic nitrogen compounds can be those present in cell of plant origin. They are often selected from the group consisting of amines, urea, proteins, peptides, amino-acids, nucleic acids, glucosinolates, degradation products thereof like isothiocyanates, thiocyanates, nitriles, oxazolidinethiones, phospholipids containing nitrogen, chlorophylls, pheophytines, sinapine, and any mixture of at least two of them.

Examples of phospholipids containing nitrogen are phospatidyl cholin, phosphatidyl serin and phosphatidyl ethanolamine.

Examples of amino acids free or which could be part of peptides or proteins composition are alanine, arginine, aspartic acid, cystine, glutamic acid, glycine, histidine, isoleucine, leucine, lysine, methionine, phenylalanine, proline, serine, threonine, tryptophane, tyrosine, valine and any mixture of at least two of them.

Examples of glucosinolates are sinigrine, gluconapine, glucobrassicanapine, glycorucine, glucoberteroine, glucoraphanin, glucoalyssin, gluconasturtiine, progoitrine, napoleiferine, glucobrassicine, neoglucobrassicine, and any mixture of at least two of them.

The inorganic nitrogen compounds are frequently selected from the groups consisting of ammonia, hydrazine, chloramines, ammonium inorganic salts, nitrates, nitrites, cyanates, isocyanates, ammonium isothiocyanates, metallic isothiocyanates, and any mixture of at least two of them.

The total nitrogen content of the glycerol expressed as g of N/kg is generally greater than or equal to 0.001, usually greater than or equal to 0.005, often greater than or equal to 0.01, and more often greater than or equal to 0.5. That content is generally lower than or equal to 5, frequently lower than or equal to 2, and more frequently lower than or equal to 1.

That nitrogen content is obtained by chemiluminescence technique.

In the process according to the invention, the glycerol generally contains sulfur compounds. The sulfur compounds can be organic sulfur compounds or inorganic sulfur compounds.

Examples of organic sulfur compounds are amino acids containing sulfur, like methionine, cysteine, and cystine, free or being part of peptides or proteins composition, glucosinolates, degradation products thereof like isothiocyanates and thiocyanates, and any mixture of at least two of them.

Examples of inorganic sulfur compounds are sulfates, hydrogensulfates, sulfites, hydrogensulfites, sulfides, hydrogensulfides containing compounds, and any mixture of least two of them. The inorganic sulfur compound is often a sulfate containing compound.

The total sulfur content of the glycerol expressed as g of S /kg is usually greater than or equal to 0.0001, often greater than or equal to 0.001, and more often greater than or equal to 0.01. That content is generally lower than or equal to 15, frequently lower than or equal to 10, more frequently lower than or equal to 5 and still more frequently lower than or equal to 1.

In the process according to the invention, the glycerol generally contains phosphorus compounds.

The phosphorus compounds can be organic phosphorus compounds or inorganic phosphorus compounds.

Examples of organic phosphorus compounds are glycerophospholids, like phosphatidyl choline, phosphatidylethanolamine, phosphatidylserine, phosphatidylinositol, polyphosphoinositides, phosphatidylglycerol, phosphatidic acid, and any mixture of at least two of them.

Examples of inorganic phosphorus compounds are phosphate, hydrogenphosphates, phosphite and hydrogenphosphites containing compounds, and mixture thereof. The inorganic sulfur compound is often a phosphate containing compound.

The total phosphorus content of the glycerol expressed as g of P /kg is generally greater than or equal to 0.00001, more generally greater than or equal to 0.0001, usually greater than or equal to 0.001, often greater than or equal to 0.01, and more often greater than or equal to 0.5. That content is generally lower than or equal to 20, frequently lower than or equal to 15, more frequently lower than or equal to 10, and still more frequently lower than or equal to 5, and yet more frequently lower than or equal to 1.

In the process according to the invention, the glycerol generally contains inorganic chlorine compounds.

Examples of inorganic chlorine compounds are chloride containing compounds.

The total inorganic chlorine content of the glycerol expressed as g of chloride /kg is generally greater than or equal to 0.001, is usually greater than or equal to 0.05, often greater than or equal to 0.1, and more often greater than or equal to 0.5. That content is generally lower than or equal to 40, frequently lower than or equal to 20, more frequently lower than or equal to 10, and still more frequently lower than or equal to 5, and yet more frequently lower than or equal to 1.

In the process according to the invention, the glycerol may also comprise monoalcohols, usually at least one monoalcohol, such as the monoalcohols described in Application WO 2007/144335 in the name of SOLVAY SA, from page 3, lines 26 to 31, and the content of which is incorporated here by reference.

Examples of monoalcohols are methanol, ethanol, propanol, preferably n-propanol and/or isopropanol, allyl alcohol, butanol, preferably 1-butanol and/or 2-butanol and/or isobutanol and/or tert-butanol, pentanol, preferably 1-pentanol and/or 2-pentanol and/or 3-methyl-1-butanol,hexanol, heptanol, octanol, methylpropanol, 3-methylbutane-1-ol, 2-methylbutane-1-ol, pentenol, hexenol, 2-phenylethanol, and any mixture of at least two of them.

The monoalcohol content of the glycerol expressed as g of methanol/kg of glycerol is usually greater than or equal to 0.001, often greater than or equal to 0.01, more often greater than or equal to 0.1, yet more often greater than or equal to 0.5, still more often greater than or equal to 1 and in particular greater than or equal to 10. That content is generally lower than or equal to 500, frequently lower than or equal to 300, more frequently lower than or equal to 200, yet more frequently lower than or equal to 100 and still more frequently lower than or equal to 50. The monoalcohol is often chosen from the group consisting of methanol, ethanol, n-propanol, isopropanol, n-butanol, and any mixture of at least two of them.

In the process according to the invention, the glycerol generally contains diols, usually at least one diol, as described in Application WO 2009/000773 in the name of SOLVAY SA, from page 1, line 30, to page 3, line 21, and the content of which is incorporated here by reference.

Examples of diols are 1,2-ethanediol (ethylene glycol), 1,2-propanediol (propylene glycol), 1,3-propanediol, 1,2-butanediol, 2,3-butanediol, 1,4-butanediol and any mixture of at least two of them.

The diol content of the glycerol expressed as g of diol/kg of glycerol is usually greater than or equal to 0.001, often greater than or equal to 0.01, more often greater than or equal to 0.1 and yet more often greater than or equal to 0.5. That content is generally lower than or equal to 10, frequently lower than or equal to 5, and more frequently lower than or equal to 1. The diol is frequently selected from the group consisting of ethylene glycol, 1,2-propanediol, 1,3-propanediol, 1,2-butanediol, 1,3-butanediol, 2,3-butanediol, and any mixture of at least two of them.

The ethylene glycol content of the glycerol is generally less than or equal to 100 g/kg of product. This content is usually less than or equal to 90 g/kg, commonly less than or equal to 50 g/kg, in many cases less than or equal to 10 g/kg, particularly less than or equal to 1 g/kg, specifically less than or equal to 0.5 g/kg and often less than or equal to 0.2 g/kg. This amount is usually greater than or equal to 0.001 g/kg of product, generally greater than or equal to 0.005 g/kg, commonly greater than or equal to 0.01 g/kg, in many cases greater than or equal to 0.04 g/kg and often greater than or equal to 0.1 g/kg.

The propylene glycol content of the glycerol is generally less than or equal to 100 g/kg of product. This content is usually less than or equal to 90 g/kg, commonly less than or equal to 50 g/kg, in many cases less than or equal to 10 g/kg, particularly less than or equal to 1 g/kg, specifically less than or equal to 0.5 g/kg and often less than or equal to 0.2 g/kg. This amount is usually greater than or equal to 0.001 g/kg of product, generally greater than or equal to 0.005 g/kg, in many cases greater than or equal to 0.01 g/kg, commonly greater than or equal to 0.04 g/kg and often greater than or equal to 0.1 g/kg.

The 1,3-propanediol content of the glycerol is generally less than or equal to 100 g/kg of product. This content is usually less than or equal to 90 g/kg, commonly less than or equal to 50 g/kg, in many cases less than or equal to 10 g/kg, particularly less than or equal to 1 g/kg, specifically less than or equal to 0.5 g/kg and often less than or equal to 0.2 g/kg. This amount is usually greater than or equal to 0.001 g/kg of product, generally greater than or equal to 0.005 g/kg, in many cases greater than or equal to 0.01 g/kg, commonly greater than or equal to 0.04 g/kg and often greater than or equal to 0.1 g/kg.

In the process according to the invention, the glycerol generally contains glycerol alkyl ethers, usually at least one glycerol alkyl ether, as described in Application WO 2007/144335 in the name of SOLVAY SA, from page 1, line 33, to page 3, line 25, and the content of which is incorporated here by reference.

The glycerol alkyl ethers can be glycerol mono-, di- and/or triethers, the alkyl groups of which are selected independently from alkyl radicals comprising at least one 1 carbon atom and at most 8 carbon atoms.

These alkyl groups are preferably linear or branched or alicyclic aliphatic alkyl groups and more preferably linear or branched aliphatic groups. The ether functional group on the alkyl group is made via a primary, secondary or tertiary carbon atom. The alkyl groups are preferably selected from the methyl, ethyl, propyl, butyl, pentyl, hexyl, heptyl and octyl groups and more preferably from the methyl, ethyl, propyl and butyl groups and particularly preferably from the methyl and ethyl groups. Very particularly preferably, the alkyl group is a methyl group. The propyl group can be chosen from the n-propyl and isopropyl groups and is preferably an isopropyl group. The butyl group can be chosen from the 1-butyl, 2-butyl, isobutyl and tert-butyl groups, preferably from the isobutyl and tert-butyl groups.

Examples of glycerol alkyl ethers are mono-, di- and triethers of glycerol the alkyl groups of which are independently selected from the group consisting of methyl, ethyl, propyl, butyl, pentyl, hexyl, heptyl and octyl groups.

The glycerol alkyl ethers can be glycerol mono-, di- and trialkyl ethers, preferably mono- and diethers and more preferably monoethers. Glycerol monomethyl, monoethyl, monopropyl, monobutyl, monopentyl, monohexyl, monoheptyl and monooctyl ethers are preferred. The monomethyl, monoethyl, monopropyl and monobutyl ethers are more preferred. The monomethyl and monoethyl ethers are more preferred still and glycerol monomethyl ethers are very particularly preferred.

The monopropyl ethers can be chosen from the n-propyl, the isopropyl ethers or mixtures thereof and are preferably isopropyl ethers. The monobutyl ethers can be chosen from the 1-butyl, 2-butyl, isobutyl, tert-butyl ethers and any mixtures of at least two of them, and are preferably chosen from isobutyl or tert-butyl ethers.

When the glycerol alkyl ethers are di- and triethers, the alkyl groups can be identical or different. These groups are preferably identical.

The preferred monoethers are 3-alkoxy-1,2-propanediol and 2-alkoxy-1,3-propanediol. The content of 3-alkoxy-1,2-propanediol in the mixture of 3-alkoxy-1,2-propanediol and of 2-alkoxy-1,3-propanediol is generally at least 50 %, preferably at least 60 % and very preferably at least 70 %. This content is at most 95 % and preferably at most 90 %.

The glycerol monomethyl ethers are 3-methoxy-1,2-propanediol and 2-methoxy-1,3-propanediol. The content of 3-methoxy-1,2-propanediol in the mixture of 3-methoxy-1,2-propanediol and of 2-methoxy-1,3-propanediol is generally at least 50 %, preferably at least 60 % and very preferably at least 70 %. This content is at most 95 % and preferably at most 90 %.

The glycerol monoethyl ethers are 3-ethoxy-1,2-propanediol and 2-ethoxy-1,3-propanediol. The content of 3-ethoxy-1,2-propanediol in the mixture of 3-ethoxy-1,2-propanediol and of 2-ethoxy-1,3-propanediol is generally at least 50 %, preferably at least 60 % and very preferably at least 70 %. This content is at most 95 % and preferably at most 90 %.

The glycerol monopropyl ethers are 3-propoxy-1,2-propanediol and 2-propoxy-1,3-propanediol. The content of 3-propoxy-1,2-propanediol in the mixture of 3-propoxy-1,2-propanediol and of 2-propoxy-1,3-propanediol is generally at least 50 %, preferably at least 60 % and very preferably at least 70 %. This content is at most 95 % and preferably at most 90 %. The propoxy group can be an n-propoxy or isopropoxy, preferably an isopropoxy group.

The glycerol monobutyl ethers are 3-butoxy-1,2-propanediol and 2-butoxy-1,3-propanediol. The content of 3-butoxy-1,2-propanediol in the mixture of 3-butoxy-1,2-propanediol and of 2-butoxy-1,3-propanediol is generally at least 50 %, preferably at least 60 % and very preferably at least 70 %. This content is at most 95 % and preferably at most 90 %. The butoxy group can be chosen from the 1-butoxy, 2-butoxy, isobutoxy and tert-butoxy groups, preferably from the isobutoxy and tert-butoxy groups.

The glycerol alkyl ether content of the glycerol expressed as g of glycerol alkyl ether /kg of glycerol is usually greater than or equal to 0.001, often greater than or equal to 0.01, more often greater than or equal to 0.1, yet more often greater than or equal to 0.5 and still more often greater than or equal to 1. That content is generally lower than or equal to 15, frequently lower than or equal to 10, and more frequently lower than or equal to 5. The glycerol alkyl ether is often chosen from 3-methoxy-1,2-propanediol, 2-methoxy-1,3-propanediol, 3-monopropylenediol or any mixture of at least two of them.

The 3-methoxy-1,2-propanediol content of the glycerol expressed as mg of 3-methoxy-1,2-propanediol /kg of glycerol is usually greater than or equal to 1, often greater than or equal to 5, more often greater than or equal to 10, yet more often greater than or equal to 50 and still more often greater than or equal to 100. That content is generally lower than or equal to 2000, frequently lower than or equal to 1000, and more frequently lower than or equal to 300.

In the process according to the invention, the glycerol may have an alkali metal and/or alkaline earth metal content as described in WO 2006/100315 of SOLVAY SA, the content of which is incorporated herein by reference, and especially the passages from page 7, line 11, to page 9, line 10.

In the process according to the invention the alkali metals are generally lithium, sodium, potassium and cesium, often sodium and potassium, and frequently sodium.

In the process according to the invention, the lithium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the sodium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the potassium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the rubidium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the cesium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention the alkaline earth metal elements are generally magnesium, calcium, strontium and barium, often magnesium and calcium and frequently calcium.

In the process according to the invention, the magnesium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the calcium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the strontium content of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention, the barium content of the glycerol is generally less than or equal to 1 g/kg, often less than or equal to 0.1 g/kg, more particularly less than or equal to 2 mg/kg, and more particularly less than or equal to 1 mg/kg. This content is generally greater than or equal to 0.1 µg/kg.

In the process for preparing a chlorohydrin according to the invention, the sum of the potassium content and of the magnesium content of the polyhydroxylated aliphatic hydrocarbon, the ester of polyhydroxylated aliphatic hydrocarbon or the mixture thereof is generally less than or equal to 1 g/kg, often less than or equal to 0.1 g/kg and more particularly less than or equal to 2 mg/kg. This content is generally greater than or equal to 0.1 µg/kg.

In the process according to the invention, the sum of the sodium content and of the glycerol is generally less than or equal to 1 g/kg, often less than or equal to 0.1 g/kg and more particularly less than or equal to 2 mg/kg. This content is generally greater than or equal to 0.1 µg/kg.

In the process according to the invention the alkali and/or alkaline earth metals are generally present in the form of salts, frequently in the form of chlorides, sulphates and mixtures thereof. Sodium chloride is the most often encountered.

In the process according to the invention, the glycerol may contain elements other than alkali metals and alkaline earth metals as described in WO 2006/100319 of SOLVAY SA, the content of which is incorporated herein by reference, especially the passages from page 2, line 3 to 8, and from page 6, line 20, to page 9, line 14.

In the process according to the invention, the glycerol may also comprise metals, often at least one metal. The metal can be present in the metallic form, as a salt,or as a mixture thereof. The metal is often found in the elements of the groups IA, IIA, IVB, VB, VIB, VIIB, VIIII, IB, IIB, IIA, IVA, VA, VIA of the Periodic Table of the Elements.

The metal of Group IA content of the glycerol expressed as mg of metal/kg of glycerol is usually greater than or equal to 0.01, often greater than or equal to 0.1, more often greater than or equal to 1, yet more often greater than or equal to 10, still more often greater than or equal to 100 and in particular greater than or equal to 500. That content expressed as g of metal/kg of glycerol is generally lower than or equal to 50, usually lower than or equal to 30, frequently lower than or equal to 10, and more frequently lower than or equal to 5 and yet more frequently lower than or equal to 1. The metal of Group IA is often found in the group consisting of group consisting of Na, K, and mixture thereof.

The metal of Group IIA content of the glycerol expressed as mg of metal/kg of glycerol is usually greater than or equal to 0.001, often greater than or equal to 0.005, more often greater than or equal to 0.01, yet more often greater than or equal to 0.05, still more often greater than or equal to 0.1 and in particular greater than or equal to 1. That content is generally lower than or equal to 200, frequently lower than or equal to 150, and more frequently lower than or equal to 100, yet more frequently lower than or equal to 50, still more frequently lower than or equal to 10. The metal of Group IIA is often found in the group consisting of group consisting of Ba, Ca, Be, Mg and mixture thereof.

The metal of Group IVB content of the glycerol expressed as mg of metal/kg of glycerol is usually greater than or equal to 0.001, often greater than or equal to 0.005, more often greater than or equal to 0.01, and yet more often greater than or equal to 0.05. That content is generally lower than or equal to 10, frequently lower than or equal to 5, and more frequently lower than or equal to 1, and yet more frequently lower than or equal to 0.1. The metal of Group IVB is often Ti.

The metal of Group VB content of the glycerol expressed as mg of metal/kg of glycerol is usually greater than or equal to 0.001, often greater than or equal to 0.005, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group VB is often V.

The metal of Group VIB content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group VIB is often Cr.

The metal of Group VIIB content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group VIIB is often Mn.

The metal of Group VIII content of the glycerol expressed as mg of metal/kg of glycerol is usually greater than or equal to 0.0001, often greater than or equal to 0.001, more often greater than or equal to 0.01, yet more often greater than or equal to 0.05 and still more often greater than or equal to 0.1. That content is generally lower than or equal to 50, frequently lower than or equal to 30, more frequently lower than or equal to 20, yet more frequently lower than or equal to 10 and still more frequently lower than or equal to 1. The metal of Group VIII is often found in the group consisting of group consisting of Co, Fe, Ni, and mixture of at least two of them.

The metal of Group IB content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group IB is often Cu.

The metal of Group IIB content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group IIB is often found in the group consisting of group consisting of Cd, Hg, Zn, and any mixture of at least two of them.

The metal of Group IIIA content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group IIIA is often Al.

The metal of Group IVA content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 10, frequently lower than or equal to 5, and more frequently lower than or equal to 1, and yet more frequently lower than or equal to 0.1. The metal of Group IVA is often found in the group consisting of group consisting of Pb, Sn, and mixture thereof.

The metal of Group VA content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 1000, frequently lower than or equal to 500, and more frequently lower than or equal to 100, yet more frequently lower than or equal to 10, still more frequently lower than or equal to 1 and in particular lower than or equal to 0.1. The metal of Group VA is often found in the group consisting of group consisting of As, Sb, P, and any mixture of at least two of them.

The metal of Group IVA content of the glycerol expressed as mg of metal/kg of glycerol is usually greater than or equal to 0.0001, often greater than or equal to 0.001, more often greater than or equal to 0.01, yet more often greater than or equal to 0.05. That content is generally lower than or equal to 20, frequently lower than or equal to 10, more frequently lower than or equal to 1, and yet more frequently lower than or equal to 0.1. The metal of Group VIA is often found in the group consisting of group consisting of S, Se, Te, and any mixture of at least two of them.

In the process for preparing a chlorohydrin according to the invention, the iron content of the polyhydroxylated aliphatic hydrocarbon, the ester of polyhydroxylated aliphatic hydrocarbon or the mixture thereof is less than or equal to 100 mg/kg, preferably less than or equal to 10 mg/kg and with particular preference less than or equal to 1 mg/kg. Said content is generally greater than or equal to 0.1 µg/kg.

In the process according to the invention, the nickel content of the glycerol is less than or equal to 10 mg/kg, preferably less than or equal to 1 mg/kg and with particular preference less than or equal to 0.1 mg/kg. Said content is generally greater than or equal to 0.1 µg/kg.

In the process according to the invention, the chromium content of the glycerol is less than or equal to 10 mg/kg, preferably less than or equal to 1 mg/kg and with particular preference less than or equal to 0.1 mg/kg. Said content is generally greater than or equal to 0.1 µg/kg.

In the process according to the invention, the copper content of the glycerol is less than or equal to 10 mg/kg, preferably less than or equal to 2 mg/kg, more preferably less than or equal to 1 mg/kg and with particular preference less than or equal to 0.25 mg/kg. Said content is generally greater than or equal to 0.1 µg/kg.

In the process according to the invention, the cumulative lead, arsenic and cobalt content of the glycerol is less than or equal to 5 mg/kg, preferably less than or equal to 3 mg/kg and with particular preference less than or equal to 0.1 mg/kg. Said content is generally greater than or equal to 0.1 µg/kg.

In the process according to the invention, the arsenic content of the glycerol is less than or equal to 5 mg/kg, preferably less than or equal to 3 mg/kg, with particular preference less than or equal to 0.2 mg/kg, and with more particular preference less than or equal to 0.1 mg/kg. Said content is generally greater than or equal to 0.1 µg/kg.

In the process according to the invention, the lead content of the glycerol is less than or equal to 5 mg/kg, preferably less than or equal to 3 mg/kg, with particular preference less than or equal to 0.2 mg/kg, with more particular preference less than or equal to 0.1 mg/kg, and with yet more particular preference less than or equal to 0.02 mg/kg. Said content is generally greater than or equal to 0.1 µg/kg.

In the process according to the invention, the titanium content of the glycerol is less than or equal to 10 mg/kg, preferably less than or equal to 5 mg/kg and with particular preference less than or equal to 1 mg/kg. Said content is generally greater than or equal to 0.1 µg/kg.

In the process according to the invention, the cumulative titanium, vanadium, tin and tellurium content of the glycerol is less than or equal to 10 mg/kg, preferably less than or equal to 5 mg/kg and with particular preference less than or equal to 0.1 mg/kg. Said content is generally greater than or equal to 0.1 µg/kg.

In the process according to the invention, the cumulative cadmium and antimony content of the glycerol is less than or equal to 5 mg/kg, preferably less than or equal to 1 mg/kg and with particular preference less than or equal to 0.1 mg/kg. Said content is generally greater than or equal to 0.1 µg/kg.

In the process according to the invention, the cadmium content of the glycerol is less than or equal to 5 mg/kg, preferably less than or equal to 1 mg/kg, with particular preference less than or equal to 0.1 mg/kg, and with more particular preference less than or equal to 0.02 mg/kg. Said content is generally greater than or equal to 0.1 µg/kg.

In the process according to the invention, the mercury content of the glycerol is less than or equal to 1 mg/kg, preferably less than or equal to 0.5 mg/kg and with particular preference less than or equal to 0.04 mg/kg. Said content is generally greater than or equal to 0.1 µg/kg.

In the process according to the invention, the zinc content of the glycerol is less than or equal to 10 mg/kg, preferably less than or equal to 2 mg/kg and with particular preference less than or equal to 1 mg/kg. Said content is generally greater than or equal to 0.1 µg/kg.

In the process according to the invention, the selenium content of the glycerol is less than or equal to 10 mg/kg, preferably less than or equal to 2 mg/kg, with particular preference less than or equal to 1 mg/kg, and with more particular preference less than or equal to 0.02 mg/kg. Said content is generally greater than or equal to 0.1 µg/kg.

In the process according to the invention, the cumulative selenium and zinc content of the glycerol is less than or equal to 12 mg/kg, preferably less than or equal to 1 mg/kg and with particular preference less than or equal to 0.2 mg/kg. Said content is generally greater than or equal to 0.1 µg/kg.

In the process according to the invention, the cumulative sodium and calcium content of the glycerol is less than or equal to 50 mg/kg, preferably less than or equal to 30 mg/kg and with particular preference less than or equal to 2.5 mg/kg. Said content is generally greater than or equal to 0.1 µg/kg.

In the process according to the invention, the aluminium content of the glycerol is less than or equal to 10 mg/kg, preferably less than or equal to 5 mg/kg and with particular preference less than or equal to 1 mg/kg. Said content is generally greater than or equal to 0.1 µg/kg.

In the process according to the invention, the bismuth content of the glycerol is less than or equal to 5 mg/kg, preferably less than or equal to 1 mg/kg and with particular preference less than or equal to 0.2 mg/kg. Said content is generally greater than or equal to 0.1 µg/kg.

In the process according to the invention, the manganese content of the glycerol is less than or equal to 10 mg/kg, preferably less than or equal to 5 mg/kg, with more particular preference less than or equal to 1 mg/kg and with particular preference less than or equal to 0.2 mg/kg. Said content is generally greater than or equal to 0.1 µg/kg.

In the process according to the invention, the beryllium content of the glycerol is less than or equal to 10 mg/kg, preferably less than or equal to 5 mg/kg, with more particular preference less than or equal to 1 mg/kg, with particular preference less than or equal to 0.5 mg/kg and with more particular preference less than or equal to 0.2 mg/kg. Said content is generally greater than or equal to 0.1 µg/kg.

In the process according to the invention, the glycerol may contain compounds selected from organic acids, preferably fatty acids, organic salts, preferably fatty acid salts salts, organic acid esters, preferably fatty acid esters and mixtures thereof.

The sum of organic acid content and esters of organic acids of the glycerol expressed as mmol of carboxylic acid fonctionalities / kg is usually greater than or equal to 0.1, often greater than or equal to 0.2, and more often greater than or equal to 0.5. That content is generally lower than or equal to 50, frequently lower than or equal to 40, more frequently lower than or equal to 30, and still more frequently lower than or equal to 20, yet more frequently lower than or equal to 10, in particular lower than or equal to 6 and in particular lower than or equal to 1.

The fatty acids contain preferably at least 12 carbon atoms. Fatty acids and mixtures of fatty acids derived from vegetable oils and animal fats are preferred. Fatty acids and fatty acid mixtures derived from colza oil, sunflower oil, soybean oil and palm oil are particularly preferred. Oleic, linoleic, linolenic, palmitic and stearic acids and mixtures thereof are very particularly preferred. Oleic, linoleic and linolenic acids and mixtures thereof are especially suitable.

The salts of fatty acids are often alkali metal salts, alkaline earth metal salts and ammonium salts or mixtures thereof, and more particularly sodium, potassium and calcium salts.

In the process according to the invention, the glycerol may also comprise organic acid, frequently carboxylic acids, and often at least one carboxylic acid.

The carboxylic is usually selected from the group consisting of acetic acid, propionic acid, butyric acid and any mixture of at least two of them.

The carboxylic acid can be a fatty acid. The fatty acid is generally selected from the group consisting of valeric, caproic, caprylic, caprique, lauric, myristic, palmitic, margaric, stearic, arachidic, behenic, lignoceric, hexacosanoic, octacosanoic, melissic, dotriacontanoic, alpha-linoleic, stearidonic, eicosapentanoic, docosahexenoic, linoleic, gamma-linolenic, dihomo-gamma-linolenic, arachidonic, myristoleic, palmitoleic, petrosenilic, oleic, vaccenic, gondoic, elaidic, erucic, nervonic, alpha-linolenic, eicosatrienoic, stearidonic, octadecapentaenoic, eicosatetraenoic, eicosapentaenoic, docosapentaenoic, docosahexaenoic, ricinoleic, and any mixture of at least two of them.

The carboxylic acid, preferably fatty acid, content of the glycerol expressed as g of carboxylic acid/kg of glycerol is usually greater than or equal to 0.001, often greater than or equal to 0.01, and more often greater than or equal to 0.1. That content is generally lower than or equal to 5, frequently lower than or equal to 3, more frequently lower than or equal to 2, and yet more frequently lower than or equal to 1. The fatty acid is often selected from the group consisting of palmitic acid, oleic acid, linoleic acid, stearic acid, and any mixture of at least two of them.

The carboxylic acid content of the glycerol expressed as mmol of carboxylic acid fonctionalities / kg is usually greater than or equal to 0.1, often greater than or equal to 0.2, and more often greater than or equal to 0.5. That content is generally lower than or equal to 50, frequently lower than or equal to 40, more frequently lower than or equal to 30, and still more frequently lower than or equal to 20, yet more frequently lower than or equal to 10 and in particular lower than or equal to 1.

In the process according to the invention, the glycerol may also comprise carboxylic acids salts, often at least one carboxylic acid salt. Those salts are usually metal salts of the aforementioned carboxylic acids. The metals salts are often found in the group consisting of Na, K, Ba, Ca, Be, Mg, Ti, V, Cr, Mn, Co, Fe, Ni, Cu, Cd, Hg, Zn, Al, Pb, Sn, As, Sb, and any mixture of at least two of them.

The carboxylic acid salt content of the glycerol expressed as g of carboxylate anion / kg is usually greater than or equal to 0.01, often greater than or equal to 0.05, and more often greater than or equal to 1. That content is generally lower than or equal to 80, frequently lower than or equal to 60, more frequently lower than or equal to 40, and still more frequently lower than or equal to 20, yet more frequently lower than or equal to 10 and in particular lower than or equal to 5. The carboxylic acid salt is often a salt of acetic acid.

The carboxylic acid salt content of the glycerol expressed as mmol of carboxylate anion functionalities / kg is usually greater than or equal to 1, often greater than or equal to 2, and more often greater than or equal to 10. That content is generally lower than or equal to 1000, frequently lower than or equal to 800, more frequently lower than or equal to 600, and still more frequently lower than or equal to 400, yet more frequently lower than or equal to 200 and in particular lower than or equal to 100.

In the process according to the invention, the glycerol may also comprise esters of organic acids, like alkyl esters of fatty acids, usually at least one alkyl ester of fatty acids, glycerol esters, generally at least one glycerol ester, and salts, commonly at least one salt, as described in Application WO 2007/144335 in the name of SOLVAY SA, from page 5, lines 12 to 20.

The term "alkyl esters of fatty acids" is intended to denote esters of fatty acids with mono- or polyalcohols, the alkyl group of the ester being one of the groups described above for the glycerol alkyl ethers. These alkyl esters are preferably methyl, ethyl, propyl and butyl esters of fatty acids, more preferably methyl and ethyl esters and very particularly preferably methyl esters of fatty acids.

Esters of of glycerol are preferably selected from esters of glycerol with acetic acid, esters of glycerol with fatty acids, and mixture thereof. The esters of glycerol with acetic acid are preferably selected from monoacetate, diacetate, triacetates of glycerol, and mixture thereof. Monoacetate of glycerol is more often encountered. Esters of glycerol with fatty acids, are preferably selected from monoesters, diesters or triesters of glycerol, and mixture thereof. Monoesters of glycerol with fatty acids are more preferably selected from glycerol monovalerate, glycerol monocaproate, and mixture thereof.

The content of the acetate of glycerol, is generally of at least 1 mg/kg, often of at least 10 mg/kg, frequently of at least 100 mg/kg and in particular of at least 250 mg/kg. That content is generally of at most 5000 mg/kg, often of at most 1000 mg/kg and frequently of at most 500 mg/kg.

The content of the monovalerate of glycerol, is generally of at least 1 mg/kg, often of at least 10 mg/kg, frequently of at least 20 mg/kg and in particular of at least 40 mg/kg. That content is generally of at most 1000 mg/kg, often of at most 500 mg/kg and frequently of at most 100 mg/kg.

The content of the monocaproate of glycerol, is generally of at least 1 mg/kg, often of at least 50 mg/kg, frequently of at least 100 mg/kg and in particular of at least 200 mg/kg. That content is generally of at most 5000 mg/kg, often of at most 1000 mg/kg and frequently of at most 500 mg/kg.

The carboxylic acid ester content of the glycerol expressed as mmol of carboxylic acid ester fonctionalities / kg is usually greater than or equal to 0.1, often greater than or equal to 0.2, and more often greater than or equal to 0.5. That content is generally lower than or equal to 10, frequently lower than or equal to 5, and more frequently lower than or equal to 1.

The alkyl ester of fatty acid is usually an ester of fatty acid frequently selected from the group of the fatty acids aforementioned and with a monoalcohol, often selected from the group consisting of methanol, ethanol, propanol and any mixture of two of them.

The alkyl ester of fatty acid content of the glycerol expressed as g of alkyl ester of fatty acid/kg of glycerol is usually greater than or equal to 0.01, often greater than or equal to 0.05, and more often greater than or equal to 0.1. That content is generally lower than or equal to 10, frequently lower than or equal to 5, more frequently lower than or equal to 2, and yet more frequently lower than or equal to 1. The alkyl ester of fatty acid is often selected from the group consisting of methyl palmitate, methyl oleate, methyl linoleate, methyl linolenate, methyl stearate, and any mixture of at least two of them.

The glycerol ester is usually mono-, a di- or a triester of glycerol with a carboxylic acid frequently selected from the group of the carboxylic acids aforementioned, often selected from the group consisting acetic acid, propionic acid, fatty acids aforementioned and any mixture of two of them. The esters of glycerol with fatty acids more often encountered are monovalerate, monocaproate, monopalmitate, monooletae, monolinoleate, monolinolenate, monostearate, and any mixture of at least two of them, and more preferably monovalerate, monocaproate, and mixture thereof.

The alkyl ester of fatty acid content of the glycerol expressed as g of alkyl ester of fatty acid/kg of glycerol is usually greater than or equal to 0.01, often greater than or equal to 0.05, and more often greater than or equal to 0.1. That content is generally lower than or equal to 10, frequently lower than or equal to 5, more frequently lower than or equal to 2, and yet more frequently lower than or equal to 1.

In the process according to the invention, the glycerol may contain glycerol oligomers as described in WO 2009/121853 of SOLVAY SA the content of which is incorporated herein by reference, especially the passages from page 1, line 25, to page 6, line 19.

The glycerol oligomer is generally selected from the group consisting of diglycerol, cyclic diglycerol, polyglycerols containing more than 2 glycerol units, cyclic polyglycerol *i. e.* polyglycerols containing more than 2 glycerol units and at least one ring, and any mixture of at least two of them.

The expression "cyclic oligomer of glycerol " is understood to mean a cyclic compound resulting from condensation reactions between at least two glycerol molecules, i.e. a compound resulting from condensation reactions between at least two glycerol molecules and the chemical structure of which contains at least one cycle or ring.

In the process according to the invention, the cyclic oligomer of glycerol is generally a compound resulting from condensation reactions between at least 2 glycerol molecules (dimer), and at most 7 glycerol molecules (heptamer), often at most 6 glycerol molecules (hexamer), frequently at most 4 glycerol molecules (tetramer) and more specifically at most 3 glycerol molecules (trimer).

The cyclic oligomer of glycerol is usually an oligomer of glycerol for which at least some of the carbon atoms are located in the at least one ring of the chemical structure. The number of atoms constituting the ring is generally greater than or equal to 6, often greater than or equal to 7 and sometimes greater than or equal to 8. The number of atoms constituting the ring is generally less than or equal to 20. The ring generally comprises at least two oxygen atoms and often 2 oxygen atoms. Cyclic oligomers of glycerol containing a single ring constituted of 6 atoms, of which 2 of the atoms are oxygen atoms, are particularly suitable. Cyclic oligomers of glycerol containing a single ring constituted of 7 atoms, of which 2 of the atoms are oxygen atoms, are particularly convenient. Cyclic oligomers of glycerol containing a single ring constituted of 8 atoms, of which 2 of the atoms are oxygen atoms, are also particularly suitable.

In the process according to the invention, the cyclic oligomer of glycerol is preferably chosen from the group consisting of cyclic dimers of glycerol, cyclic trimers of glycerol, cyclic tetramers of glycerol, and mixtures of at least two of these glycerol oligomers.

In the process according to the invention, the cyclic oligomer of glycerol is often a cyclic compound resulting from condensation reactions between two glycerol molecules, i.e., a cyclic dimer of glycerol.

The dimer of cyclic structure generally comprises at least one ring and often only one ring. The ring generally comprises 6 atoms, often 7 atoms and frequently 8 atoms, of which two atoms are oxygen atoms and the remainder are carbon atoms.

In the process according to the invention, the cyclic dimer of glycerol usually comprises at least one of the compounds selected from the group consisting of cis- and trans-2,5-bis-(hydroxymethyl)-1,4-dioxane, cis- and trans-2,6-bis(hydroxymethyl)-1,4-dioxane, cis- and trans-6-hydroxy-2-hydroxymethyl-1,4-dioxepane, and cis- and trans-3,7-dihydroxy-1,5-dioxocane, and any mixture of at least two of them.

In the process according to the invention, the cyclic dimer of glycerol is often a mixture comprising all the preceding isomers.

In the process according to the invention, the cyclic dimer of glycerol is often a mixture consisting essentially of all the preceding isomers.

In the process according to the invention, the content of the cyclic oligomer of glycerol is often less than or equal to 10 g of cyclic oligomer/kg of composition, frequently less than or equal to 5 g/kg, commonly less than or equal to 2.5 g/kg, specifically less than or equal to 1 g/kg, more specifically less than or equal to 0.5 g/kg and particularly less than or equal to 0.1 g/kg. This content is often greater than or equal to 0.05 g/kg.

In the process according to the invention, the content of the cyclic dimer of glycerol is often less than or equal to 10 g of cyclic dimer/kg of composition, frequently less than or equal to 5 g/kg, commonly less than or equal to 2.5 g/kg, specifically less than or equal to 1 g/kg, more specifically less than or equal to 0.5 g/kg and particularly less than or equal to 0.1 g/kg. This content is often greater than or equal to 0.05 g/kg.

In the process according to the invention, the sum of the contents of cis- and trans-2,5-bis(hydroxymethyl)-1,4-dioxane, cis- and trans-2,6-bis-(hydroxymethyl)-1,4-dioxane, cis- and trans-6-hydroxy-2-hydroxymethyl-1,4-dioxepane, and cis- and trans-3,7-dihydroxy-1,5-dioxocane is often less than or equal to 10 g/kg of composition, frequently less than or equal to 5 g/kg, commonly less than or equal to 2.5 g/kg, specifically less than or equal to 1 g/kg, more specifically less than or equal to 0.5 g/kg and particularly less than or equal to 0.1 g/kg. This content is often greater than or equal to 0.05 g/kg.

In the process according to the invention, the glycerol may in addition contain at least one oligomer of glycerol chosen from the group consisting of oligomers of glycerol of linear structure, of branched structure, and of mixtures of at least two of these oligomers. The additional oligomer of glycerol is often a mixture of at least two of these oligomers.

The expression "oligomers of linear structure" is understood to mean oligomers in which all the carbon atoms are located in one and the same chain of atoms, which is not a ring.

The expression "oligomers of branched structure" is understood to mean oligomers for which the carbon atoms are located in at least two chains of atoms.

The oligomers of glycerol of "linear structure" and the oligomers of glycerol "of branched structure" are not cyclic oligomers of glycerol. They will be referred also further as non cyclic oligomers of glycerol.

In the process according to the invention, the glycerol oligomer of linear structure and the glycerol oligomer of branched structure are independently preferably chosen from the group consisting of glycerol dimers, glycerol trimers, glycerol tetramers, and mixtures of at least two of these glycerol oligomers.

In the process according to the the invention, the glycerol oligomer of linear structure and the glycerol oligomer of branched structure are independently and frequently a glycerol dimer.

In the process according to the invention, the glycerol dimer of linear structure and the glycerol dimer of branched structure are often a mixture of the dimer of linear structure, and of at least one dimer of branched structure.

The non cyclic oligomer of glycerol is often a mixture of at least two of the compounds selected from the group consisting of 3-(2,3-dihydroxypropoxy)-propane-1,2-diol (linear oligomer of glycerol), 3-(2-hydroxy-1-hydroxymethylethoxy)propane-1,2-diol (mono branched oligomer of glycerol) and 2-(2-hydroxy-1-hydroxymethylethoxy)propane-1,3-diol) (di branched oligomer of glycerol).

In the rest of the document, glycerol oligomers will also be called polyglycerols, and glycerol dimers, trimers,tetramers, etc. will also be called diglycerols, triglycerols, tetraglycerols, etc..

In the process according to the invention, the non cyclic polyglycerol content is often less than or equal to 10 g/kg of composition, frequently less than or equal to 5 g/kg, specifically less than or equal to 2.5 g/kg, particularly less than or equal to 1 g/kg, more specifically less than or equal to 0.5 g/kg and most particularly less than or equal to 0.1 g/kg. This content is often greater than or equal to 0.05 g/kg.

In the process according to the invention, the non cyclic diglycerol content is often less than or equal to 10 g/kg of composition, frequently less than or equal to 5 g/kg, commonly less than or equal to 2.5 g/kg, specifically less than or equal to 1 g/kg, more specifically less than or equal to 0.5 g/kg and particularly less than or equal to 0.1 g/kg. This content is often greater than or equal to 0.05 g/kg.

In the process according to the invention, the content of 3-(2,3-di-hydroxypropoxy)propane-1,2-diol (linear diglycerol) is often less than or equal to 10 g/kg of composition, frequently less than or equal to 5 g/kg, specifically less than or equal to 2.5 g/kg, commonly less than or equal to 1 g/kg, more specifically less than or equal to 0.5 g/kg and particularly less than or equal to 0.1 g/kg. This content is often greater than or equal to 0.05 g/kg.

In the process according to the invention, the sum of the contents of 3-(2-hydroxy-1-hydroxymethylethoxy)propane-1,2-diol and 2-(2-hydroxy-1-hydroxymethyl-ethoxy)propane-1,3-diol (branched diglycerols) is often less than or equal to 10 g/kg of composition, frequently less than or equal to 5 g/kg, commonly less than or equal to 2.5 g/kg, specifically less than or equal to 1 g/kg, and particularly less than or equal to 0.1 g/kg. This content is often greater than or equal to 0.05 g/kg.

The diglycerol is often selected from the group consisting of 3-(2,3-dihydroxypropoxy)-propane-1,2-diol, 3-(2-hydroxy-1-ydroxymethylethoxy) propane-1,2-diol et 2-(2-hydroxy-1-hydroxymethylethoxy)propane-1,3-diol), and any mixture of at least two of them.

The cyclic diglycerol is often selected from the group consisting of cis- and trans-2,5-bis-(hydroxymethyl)-1,4-dioxane, cis- and trans-2,6-bis-(hydroxymethyl)-1,4-dioxane, cis- and trans-6-hydroxy-2-hydroxymethyl-1,4-dioxepane, et cis- and trans-3,7-dihydroxy-1,5-dioxocane, and any mixture of at least two of them.

The polyglycerol is often selected from the group consisting of triglycerol, tétraglycerol, pentaglycerol, hexaglycerol, heptaglycerol, octaglycerol, and any mixture of at least two of them.

The glycerol oligomer content of the glycerol expressed as g of glycerol oligomer/kg of glycerol is usually greater than or equal to 0.01, often greater than or equal to 0.05, and more often greater than or equal to 0.1. That content is generally lower than or equal to 10, frequently lower than or equal to 5, more frequently lower than or equal to 2, and yet more frequently lower than or equal to 1. The glycerol oligomer is often selected from the group consisting of diglycerol, cyclic diglycerol, preferably aforementioned, and any mixture of at least two of them.

In the process according to the invention, the glycerol may contain aldehydes. The aldehydes are often selected from the group consisting of formaldehyde, acetaldehyde, propionaldehyde, butyraldehyde, pentanal, hexanal, heptanal, octanal, nonanal, decanal, undecanal, methylbutanal, glyceraldehyde, acrolein, pentenal, hexenal, hexadienal, heptenal, pyruvaldehyde, benzaldehyde, 2-hydroxy-propionaldehyde, 3-hydroxy-propionaldehyde, and any mixture of at least two of them.

The aldehyde content of the glycerol expressed as g of aldehyde/1 of glycerol is usually greater than or equal to 0.01, often greater than or equal to 0.05, and more often greater than or equal to 0.1. That content is generally lower than or equal to 10, frequently lower than or equal to 5, more frequently lower than or equal to 2, and yet more frequently lower than or equal to 1. The aldehydes often encountered is glyceraldehyde.

In the process according to the invention, the glycerol may contain ketones. The ketones are often selected from the group consisting of acetone, butanone, pentanone, hexanone, heptanone, octanone, nonanone, decanone, undecanone, 2,3-butanedione, cyclopentanone, methylcyclopentenone, acetophenone, hydroxyacetone, dihydroxyacetone, and mixture thereof.

The ketone content of the glycerol expressed as g of ketone/1 of glycerol is usually greater than or equal to 0.01, often greater than or equal to 0.05, and more often greater than or equal to 0.1. That content is generally lower than or equal to 10, frequently lower than or equal to 5, more frequently lower than or equal to 2, and yet more frequently lower than or equal to 1.

In the process according to the invention, the glycerol may comprise acetals and ketals of the aforementioned aldehydes and ketones with glycerol, such as for example acetol glycerol ketal, 3-hydroxy-propionaldehyde ketal, and mixtures thereof.

In the process according to the invention, the glycerol may comprise carotenoids, such as for example, phytoene, phytofluene, cis-beta-carotene, beta-carotene, alpha-carotenes, cis-alpha-carotene, z-carotene, d-carotene, g-carotene, neurosporene, alpha-zeacarotene, beta-zeacarotene, lycopene, and any mixture of at least two of them.

In the process according to the invention, the glycerol may comprise aromatic and heteroaromatic derivatives, such as for example, tocopherols (alpha, beta, gamma and delta), tocotrienol, plastochromanol, ubiquinone, furane, methyl-furanes, dimethylfuranes, propylfuranes, pentylmethylfurane, mono- and di- substituted thiophenes, naphtalene, ethylnaphtalene, dimethylnaphtalene, acenaphtene, phenanthrene, pyrene, fluoranthrene, benzanthracene, chrysene, perylene, methoxybenzene, dimethoxybenzene, phenols, phenolic acids, polyphenols, and any mixture of at least two of them.

In the process according to the invention, the glycerol may comprise sugar derivatives such as for example, monogalactosyldiacylglycerols, digalactosylglycerols, sterolglycosides, their hydrolysis products and any mixture of at least two of them.

In the process according to the invention, the glycerol may contain water.

The water content of the glycerol expressed as g of water/ kg of glycerol is usually greater than or equal to 0.01, often greater than or equal to 0.05, and more often greater than or equal to 0.1. That content is generally lower than or equal to 200, frequently lower than or equal to 100, more frequently lower than or equal to 50, yet more frequently lower than or equal to 10, still more frequently lower than or equal to 5 and in particular lower than or equal to 1.

In the process according to the invention, the glycerol may exhibit an ash content expressed in weight per cent, generally higher than of 0.01, often greater than or equal to 0.05, and more often greater than or equal to 0.1. That content is generally lower than or equal to 40, frequently lower than or equal to 20, more frequently lower than or equal to 10, yet more frequently lower than or equal to 5, and in particular lower than or equal to 1.

In the process according to the invention, the glycerol may exhibit a MONG (non glycerinous organic matter) content expressed in weight per cent, generally higher than of 0.01, often greater than or equal to 0.05, and more often greater than or equal to 0.1. That content is generally lower than or equal to 80, frequently lower than or equal to 60, more frequently lower than or equal to 30, yet more frequently lower than or equal to 20, and in particular lower than or equal to 10.

In the process according to the invention, the glycerol may contain other compounds such n-alkanes linear, of formula CH₃(CH₂)xCH₃, with and odd or even number of carbon atoms from 11 to 35, branched alkanes with and odd or even number of carbon atoms from 11 to 35, alkyl esters of formula (CH₃(CH₂)ₓCOO(CH₂)_{y}CH₃, with an even number of carbon atoms from 34 to 62, fatty alcohols (primary) of formula CH₃(CH₂)_{y}CH₂OH with an even number of carbon atoms from 22 to 32, fatty aldehydes of formula CH₃(CH₂)_{y}CHO with an even number of carbon atoms from 22 to 32, ketones of formula CH₃(CH₂)ₓCO(CH₂)_{y}CH₃ with an odd number of carbon atoms from 23 to 33, fatty alcohols (secondary) of formula CH₃(CH₂)ₓCHOH (CH₂)yCH₃ with an odd number of carbon atoms from 23 to 33, β-diketones of formula CH₃(CH₂)ₓCOCH₂CO(CH₂)_{y}CH₃ with an odd number of carbon atoms from 27 to 33, triterpenols, sterols like cholesterol, campesterol, stigmasterol and sitosterol, a-amyrin, β-amyrin, uvaol, lupeol, erythrodiol, triterpenoid acids like ursolic acid, oleanolic acid, etc., hydroxy-β-diketones, oxo-β-diketones, alkenes (squalene), branched carboxylic acids, branched esters, acetates and benzoates of aliphatic alcohols, methyl, phenylethyl and triterpenoid esters, ceramides, and any mixture of at least two of them.

In the process according to the invention, the dichloropropanol exhibits usually a purity higher than 90 % by weight, preferably higher than or equal to 95 % by weight, more preferably higher than or equal to 99 % by weight and most preferably higher than or equal to 99.9 % by weight.

In the process according to the invention, the compound containing at least one active hydrogen atom can be of any type. This compound may have been from renewable raw materials, fossil raw materials and any combination thereof. This compound is preferably obtained from renewable raw materials.

The compound containing at least one active hydrogen atom is preferably selected from the group consisting of a polyol, a polycarboxylic acid, a polyamine, an amino alcohol, a polyimide, a polyamide, a polyaminoamide, a polyimine, an acid mono- or polyphenol and mixtures of at least two of these compounds.

In the process according to the invention, the compound containing at least one active hydrogen atom is more often a polyol selected from the group constituted of bisphenol A (4,4'-dihydroxy-2,2-diphenylpropane, 4,4'-isopropylidenediphenol), tetrabromobisphenol A (4,4'-isopropylidenebis(2,6-dibromophenol)), bisphenol AF (4,4'-(2,2,2-trifluoro-1-(trifluoromethyl)ethylidene]bisphenol), hexafluorobisphenol A (4,4'-dihydroxy-2,2-diphenyl-1,1,1,3,3,3-hexafluoropropane), 1,1,2,2-tetra(p-hydroxyphenyl)ethane, tetramethylbisphenol (4,4'-dihydroxy-3,3',5,5'-tetramethyl bisphenol), 1,5-dihydroxynaphthalene, l,l',7,7'-tetrahydroxydinaphthylmethane, 4,4'-dihydroxy-a-methylstilbene, a condensation product of bisphenol A with formaldehyde (bisphenol A novolac), a condensation product of phenol with formaldehyde, preferably bisphenol F (mixture of o,o', o,p' and p,p' isomers of dihydroxydiphenylmethane), a condensation product of cresol with formaldehyde (mixture of o,o', o,p' and p,p' isomers of methylhydroxydiphenylmethane), an alkylation product of phenol and of dicyclopentadiene (2,5-bis[hydroxyphenyl]octahydro-4,7-methano-5H-indene), a condensation product of phenol and of glyoxal (tetrakis(4-hydroxyphenyl)ethane), a condensation product of phenol and of a hydroxybenzaldehyde (e.g. tris(4-hydroxyphenyl)methane), 1,1,3-tris(p-hydroxyphenyl)propane, and mixtures of at least two of them, or p-aminopheno 1.

In the process according to the invention, the compound containing at least one active hydrogen atom is more frequently a polyol, preferably containing more than three carbon atoms, selected from the group consisting of a polyphenol, a sugar, a polyol derived from a sugar, an acid polyphenol, any derivative thereof, and any mixture thereof. The polyol may be as described in international application EP2011/066689 filed in the name of SOLVAY S.A., the content of which is incorporated herein by reference, more specifically the passages from page 12, line 5, to page 16, line 13.

In the process according to the invention, when the polyol is a product derived from a sugar, the product derived from a sugar is preferably selected from the group consisting of an anhydrosugar, a reduction product from sugar, a reduction product of hydroxymethylfurfural, a difuran derivative of furfural and any mixture thereof.

In the process according to the invention, when the product derived from a sugar is an anhydrosugar, it is preferably selected from the group consisting of isosorbide, isomannide, isoidide and any mixture thereof. The anhydrosugar is more preferably isosorbide.

In the process according to the invention, at least one of the compound containing at least one active hydrogen atom, of the dichloropropanol, of the epichlorohydrin and of the basic agent, has preferably been obtained from renewable raw materials.

In the process according to the invention, the basic compound may be an organic or inorganic basic compound. Organic basic compounds are for example amines, phosphines and ammonium, phosphonium or arsonium hydroxides. Inorganic basic compounds are preferred. The expression "inorganic compounds" is understood to mean compounds which do not contain a carbon-hydrogen bond. The inorganic basic compound is preferably chosen from alkali and alkaline-earth metal oxides, hydroxides, carbonates, hydrogencarbonates, phosphates, hydrogenphosphates and borates, and any mixture of at least two of them. Alkali and alkaline-earth metal oxides and hydroxides are preferred.

In the process according to the invention, the basic compound may be in the form of a liquid, an essentially anhydrous solid, a hydrated solid, an aqueous and/or organic solution or an aqueous and/or organic suspension. The basic compound is preferably in the form of an essentially anhydrous solid, a hydrated solid, an aqueous solution or an aqueous suspension.

The expression "essentially anhydrous solid" is understood to mean a solid of which the water content is less than or equal to 20 g/kg, preferably less than or equal to 10 g/kg and more preferably less than or equal to 1 g/kg.

The expression "hydrated solid" is understood to mean a solid of which the water content is at least 20 g/kg and at most 700 g/kg, preferably at least 50 g/kg and at most 650 g/kg and most particularly preferably at least 130 g/kg and at most 630 g/kg. The hydrates which denote solid combinations of substances with one or more water molecules are examples of hydrated solids.

When the basic compound is used in the form of an aqueous solution, its content in the aqueous solution is generally greater than 20 g/kg, preferably greater than or equal to 70 g/kg and more preferably greater than or equal to 150 g/kg. This content is generally less than or equal to the solubility of the basic solid in water at the reaction temperature.

When the basic compound is used in the form of an aqueous suspension, its content in the aqueous suspension is generally greater than the solubility of the basic solid in water at the reaction temperature, preferably greater than or equal to 20 g/kg and more preferably greater than or equal to 70 g/kg. This content is generally less than or equal to 400 g/kg, preferably less than 300 g/kg.

The preferred basic compounds are in the form of concentrated aqueous solutions or suspensions of sodium hydroxide or calcium hydroxide or in the form of purified caustic brine.

The sodium hydroxide content of solutions or suspensions of sodium hydroxide is generally greater than or equal to 30 g/kg, usually greater than or equal to 40 g/kg, particularly greater than or equal to 60 g/kg, in many cases greater than or equal to 100 g/kg, and preferably greater than or equal to 120 g/kg. This sodium hydroxide content is generally less than or equal to 300 g/kg, commonly less than or equal to 250 g/kg, often less than or equal to 200 g/k and advantageously less than or equal to 160 g/kg. Contents of 125, 130, 135, 140, 145, 150 and 155 g/kg are particularly convenient.

The expression "purified caustic brine" here means sodium hydroxide which contains sodium chloride such as, for example, that produced in a diaphragm electrolysis process. The sodium hydroxide content of the purified caustic brine is generally greater than or equal to 30 g/kg, preferably greater than or equal to 40 g/kg and more preferably greater than or equal to 60 g/kg. This sodium hydroxide content is generally less than or equal to 300 g/kg, preferably less than or equal to 250 g/kg and more preferably less than or equal to 200 g/kg. The sodium chloride content of the purified caustic brine is generally greater than or equal to 30 g/kg, preferably greater than or equal to 50 g/kg and more preferably greater than or equal to 70 g/kg. This sodium chloride content is generally less than or equal to 250 g/kg, preferably less than or equal to 200 g/kg and more preferably less than or equal to 180 g/kg.

It is also possible to use a mixture of several basic agents as a function of the availabilities and of the economic optimization of the industrial site where the process according to the invention is established. The basic agents preferred for producing these mixtures are limewater and solutions of sodium hydroxide and of purified caustic brine, for example, a mixture of limewater and a sodium hydroxide solution, a mixture of limewater and purified caustic brine. These mixtures may be produced in any relative proportion of at least two of these basic agents. They may be produced before introduction into the reaction zone and also in this reaction zone.

In the process according to the invention, the salt may be chosen from the group consisting of alkali or alkaline-earth metal halides, sulphates, hydrogen sulphates, hydroxides, carbonates, hydrogen carbonates, phosphates, hydrogen phosphates, borates, and mixtures thereof. Alkali and alkaline-earth metal halides are preferred. Alkali and alkaline-earth metal chlorides are more preferred. Sodium and potassium chlorides are still more preferred and sodium chloride is most particularly preferred.

In the process according to the invention, the liquid-liquid phase separation is preferably carried out when the degree of conversion of the dichloropropanol introduced in the reaction is of at least 50 %, more preferably of at least 90 %, still more preferably of at least 95 %, and most preferably of at least 99 %.

In the process according to the invention, the reaction is usually carried out in a liquid reaction medium containing at most 10 wt % of an organic solvent with respect to dichloropropanol introduced in the reaction. Epichlorohydrin is not considered as solvent. If present, the amount of organic solvent is preferably lower than or equal to 5 % with respect to dichloropropanol introduced in the reaction, and more preferably lower than or equal to 1 %. The solvent can be selected from the group consisting of alcohols, ketones, aliphatic nitriles, ethylene glycol ethers, mixtures thereof and the like.

In the process according to the invention, the reaction is preferably carried out in the absence of an organic solvent.

In the process according to the invention, the liquid-liquid phase separation is preferably carried out by unassisted gravitation or by centrifugal force-assisted gravitation or by coalescence-assisted gravitation, preferably by unassisted gravitation or by coalescence-assisted gravitation, and more preferably by unassisted gravitation. The separation may be facilitated by the use of any physical or chemical means or combinations thereof. The physical means may be of static or mechanical type or may combine the two types. A static physical means is, for example, the use of a static coalescing bed. A dynamic physical means is, for example, the use of controlled stirring. The chemical means are, for example, means that reduce the interfacial tension between the fractions to be separated or that increase the difference in density between fractions to be separated or that reduce the viscosity of the phases to be separated.

In the process according to the invention, the liquid-liquid phase separation is carried out at a temperature generally greater than or equal to 0°C, often greater than or equal to 5°C, frequently greater than or equal to 10°C, in a lot of cases greater than or equal to 20°C and in particular greater than or equal to 40°C. This temperature is generally less than or equal to 100°C, often less than or equal to 85°C, frequently less than or equal to 75°C and in a lot of cases less than or equal to 50°C.

In the process according to the invention, the liquid-liquid phase separation is carried out at a pressure generally greater than or equal to 0.01 bar absolute, often greater than or equal to 0.1 bar absolute, frequently greater than or equal to 0.15 bar absolute, in a lot of cases greater than or equal to 0.2 bar absolute and in particular greater than or equal to 0.6 bar absolute. This pressure is generally less than or equal to 20 bar absolute, often less than or equal to 15 bar absolute, frequently less than or equal to 10 bar absolute and in a lot of cases less than or equal to 1.5 bar absolute.

In the process according to the invention, at least one of the dichloropropanol, of the compound containing at least one active hydrogen atom, of the basic agent and of the possible solvent, has preferably been obtained from renewable raw materials.

The process according to the invention can be carried out in a discontinuous or continuous or semi-continuous mode. By continuous mode, one intends to denote a mode wherein the compound containing at least one active hydrogen atom, the dichloropropanol, and the basic agent are continuously fed to the reaction zone and wherein the epoxy resin is continuously withdrawn from the process. By discontinuous mode, one intends to denote any other mode. The semi-continuous mode can be considered as a discontinuous mode. By the term "continuously", one intends to denote without substantial interruption. An interruption is considered as substantial when the duration of the interruption of the considered feed or withdrawal stream amounts for more than 5 %, preferably 10 % and more preferably 15 % of the total feed or withdrawal duration. The discontinuous mode of operation is preferred.

In the process according to the invention, the reaction mixture can be submitted to other treatment than liquid/liquid separation, like for instance treatment chosen from the group consisting of dilution, concentration, evaporation, distillation, stripping, crystallization, adsorption operations, and any combination thereof.

In one particular embodiment of the process according to the invention, the basic agent is sodium hydroxide, the salt is sodium chloride obtained as a brine exhibiting a Total Organic Carbon, and the process comprises treating the brine to reduce its Total Organic Carbon, electrolyzing the treated brine to produce hydrogen, chlorine and sodium hydroxide, reacting the hydrogen and the chlorine to produce hydrogen chloride, and reacting the hydrogen chloride with glycerol to produce the dichloropropanol.

In that embodiment of the process according to the invention, the content of sodium chloride in the generated brine is generally higher than or equal to 10 g per kg of brine, in many cases higher than or equal to 30 g/kg, usually higher than or equal to 70 g/kg, frequently higher than or equal to 100 g/kg, often higher than or equal to 140 g/kg, in particular higher than or equal to 160 g/kg and most specifically higher than or equal to 200 g/kg. The sodium chloride content is usually lower than or equal to 350 g/kg, commonly lower than or equal to 325 g/kg, generally lower than or equal to 270 g/kg, often lower than or equal to 250 g/kg, and frequently lower than or equal to 230 g/kg. A sodium chloride content of about 200 g/kg is particularly convenient. The generated brine may be unsaturated, saturated or super saturated with the salt.

In that embodiment of the process according to the invention, the electrolysis can be carried out in a chlor-alkali mercury electrolysis cell, a chlor-alkali diaphragm electrolysis cell, a chlor-alkali membrane electrolysis cell, or a combination thereof. A a chlor-alkali membrane electrolysis cell is preferred.

In that embodiment of the process according to the invention, at least one part of the hydrogen chloride has been obtained by reacting hydrogen and chlorine, in a molar ratio between hydrogen and chlorine lower than or equal to 1.

In that embodiment of the process according to the invention, the molar ratio between the hydrogen chloride consumed in the process, and the sodium chloride generated in the process, expressed as elemental chlorine (Cl) is higher than or equal to 0.9.

In the process according to the invention, epichlorohydrin may be formed in situ during the reaction of the dichloropropanol with a compound containing at least one active hydrogen atom and sodium hydroxide. In that case, the process preferably comprises recovering at least one part of the epichlorohydrin and recycling at least one fraction of the recovered epichlorohydrin to the reaction for manufacturing the epoxy resin.

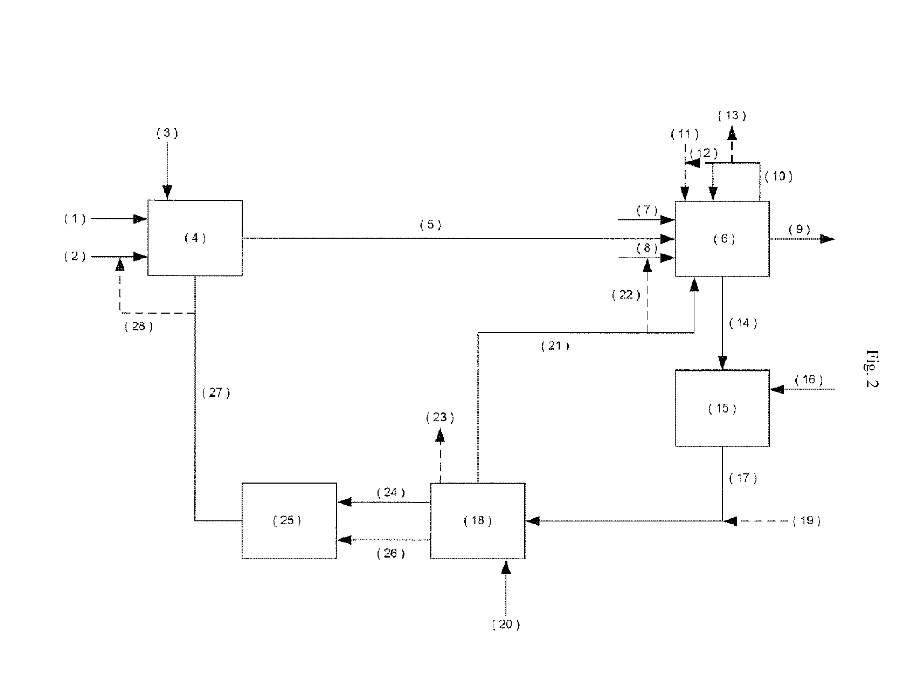

Figure 2 represents a non-limiting embodiment of the process according to the present invention.

A first stream of glycerol, preferably obtained from renewable raw materials, is fed to a first vessel (4) via a first line (1). A second stream of hydrogen chloride, gaseous, as an aqueous solution or a mixture thereof, is fed to first vessel (4) via a second line (2). A third stream of a catalyst, preferably a carboxylic acid is fed to first vessel (4) via a third line (3). First vessel (4) may comprise any combination of reactors and separation equipment. A fourth stream of dichloropropanol is withdrawn from first vessel (4) via a fourth line (5) and is fed to a second vessel (6). Also introduced in second vessel (6) are a fifth stream of a compound containing at least one active hydrogen atom via a fifth line (7) and a sixth stream of sodium hydroxide via a sixth line (8). A seventh stream of epoxy resin is withdrawn from second vessel (6) via a seventh line (9) which may be sent to storage, to further processing such as purification, or to other equipment for further reaction. An eight stream of epichlorohydrin formed in situ in second vessel (6) is withdrawn from second vessel (6) and recycled to second vessel (6) via an eighth line (10). A ninth stream of epichlorohydrin not formed in second vessel (6) may also be fed to second vessel (6) via a ninth line (11). Part of the eighth stream of epichlorohydrin may be added as a tenth stream to the ninth stream of epichlorohydrin via a tenth line (12). Part of the eight stream of the recycled epichlorohydrin may be withdrawn as an eleventh stream via a eleventh line (13) and may be sent to storage, to further processing such as purification, or to other equipment for further reaction. A twelfth stream of brine is withdrawn from second vessel (6) via a twelfth line (14) and fed to a third vessel (15). Third vessel (15) is also fed with a thirtheenth stream containing an oxidant, preferably "active chlorine" via a thirtheenth line (16). The expression "active chlorine" is understood to mean molecular chlorine and its reaction products with water, chloride ions or with a basic agent, such as hypochlorous acid, trichloride ion and sodium hypochlorite for example. A fourtheenth stream of brine is withdrawn from third vessel (16) via a fourtheenth line (17) and fed to a fourth vessel (18). A fifteenth stream of brine may be supplied via a fifteenth line (19). Also supplied to fourth vessel (18) is a sixteenth stream of electricity via a sixteenth line (20). A seventeenth stream of sodium hydroxide is withdrawn from fourth vessel (18) via a seventeenth line (21) and fed to second vessel (6). Part of the seventeenth stream of sodium hydroxide may be added as an eighteenth stream to the sixth stream of sodium hydroxide via a eighteenth line (22). A part of the seventeenth stream of sodium hydroxide may be withdrawn as a nineteenth stream via a nineteenth line (23). A twentieth stream of hydrogen is withdrawn from fourth vessel (18) via a twentieth line (24) and fed to a fifth vessel (25). Also withdrawn from fourth vessel (18) and fed to fifth vessel (25) is a twenty-first stream of chlorine via an twenty-first line (26). A twenty-second stream of hydrogen chloride is withdrawn from fifth vessel (25) and fed to first vessel (4) via a twenty-second line (27). Part of the twenty-second stream of hydrogen chloride may be added to the second stream of hydrogen chloride as a twenty-third stream via a twenty-third line (28).

Vessels (4), (6), (15), (18) and (25) contain reaction vessel of any well-known suitable type, including for example, one or more discontinuous or continuous reactors, and separation vessel of any well-known suitable type, including for example, one or more distillation columns, evaporators, strippers, settlers, adsorbers, absorbers, ion exchange equipments or combination thereof.

More specifically, vessel (18) contains any type of well-known electrolysis suitable cells, including for example, mercury, diaphragm and membrane chlor-alkali electrolysis cells.

## Claims

1. Process for manufacturing an epoxy resin by reaction of dichloropropanol with a compound containing at least one active hydrogen atom, and with a basic agent, in order to produce the epoxy resin and a salt, the reaction being carried out in a reaction mixture, the process further comprising submitting, during the reaction, at least one fraction of the reaction mixture to a treatment comprising at least one liquid-liquid phase separation.

2. Process according to claim 1, in which the liquid-liquid phase separation is carried out when the degree of conversion of the dichloropropanol introduced in the reaction is of at least 50 %.

3. Process according to claim 2, in which the liquid-liquid phase separation is carried out when the degree of conversion of the dichloropropanol introduced in the reaction is of at least 90 %.

4. Process according to any one of claims 1 to 3, wherein the reaction is carried out in a liquid reaction medium containing at most 10 wt % of an organic solvent with respect to the dichloropropanol introduced in the reaction.

5. Process according to any one of claims 1 to 4, wherein the liquid-liquid phase separation is carried out by unassisted gravitation.

6. Process according to any one of claims 1 to 5, wherein at least one of the dichloropropanol, of the compound containing at least one active hydrogen atom, of the basic agent and of the possible solvent, has been obtained from renewable raw materials.

7. Process according to any one of claims 1 to 6 carried out under discontinuous mode.

8. Process according to any one of claims 1 to 7, wherein the basic agent is sodium hydroxide and the salt is sodium chloride obtained as a brine exhibiting a Total Organic carbon, comprising treating the brine to reduce its Total Organic Carbon, electrolyzing the treated brine to produce hydrogen, chlorine and sodium hydroxide, reacting the hydrogen and the chlorine to produce hydrogen chloride, and reacting the hydrogen chloride with glycerol to produce the dichloropropanol.

9. Process according to claim 8, wherein the electrolysis is carried out in a chlor-alkali membrane electrolysis cell.

10. Process according to claim 8 or 9, wherein at least one part of the hydrogen chloride has been obtained by reacting hydrogen and chlorine, in a molar ratio between hydrogen and chlorine lower than or equal to 1.

11. Process according to any one of claim 8 to 10, wherein the molar ratio between the hydrogen chloride consumed in the process, and the sodium chloride generated in the process, expressed as elemental chlorine (Cl) is higher than or equal to 0.9.

12. Process according to any one of claims 1 to 11, in which epichlorohydrin is formed in situ during the reaction of the dichloropropanol with a compound containing at least one active hydrogen atom and sodium hydroxide, preferably comprising recovering at least one part of the epichlorohydrin and recycling at least one fraction of the recovered epichlorohydrin to the said reaction.

13. Process according to any one of claims 1 to 12 wherein the epoxy resin is selected from the group consisting of Type I Grade 1 Classes A to H,
Type II Grade 1 Classes A to F and Type VI Grade 1 Class A resins, as defined in the ASTM D 1763 - 00 (2005) standard entitled "Standard Specifications for Epoxy Resins", and any mixture thereof, wherein the epoxy resin is preferably a liquid epoxy resin selected from the group consisting of Type I Grade 1 Classes A and B, Type II Grade 1 Classes A, B and C and Type VI Grade 1 Class A resins, as defined in the ASTM D 1763 - 00 (2005) standard entitled "Standard Specifications for Epoxy Resins" and any mixture thereof.

14. Process according to any one of claims 1 to 13, wherein the compound containing at least one active hydrogen atom is a polyol selected from the group constituted of bisphenol A (4,4'-dihydroxy-2,2-diphenylpropane, 4,4'-isopropylidenediphenol), tetrabromobisphenol A (4,4'-isopropylidenebis(2,6-dibromophenol)), bisphenol AF (4,4'-[2,2,2-trifluoro-1-(trifluoromethyl)ethylidene]bisphenol), hexafluorobisphenol A (4,4'-dihydroxy-2,2-diphenyl-1,1,1,3,3,3-hexafluoropropane), 1,1,2,2-tetra(p-hydroxyphenyl)ethane, tetramethylbisphenol 1 (4,4'-dihydroxy-3,3',5,5'-tetramethyl bisphenol), 1,5-dihydroxynaphthalene, l,l',7,7'-tetrahydroxydinaphthylmethane, 4,4'-dihydroxy-a-methylstilbene, a condensation product of bisphenol A with formaldehyde (bisphenol A novolac), a condensation product of phenol with formaldehyde, preferably bisphenol F (mixture of o,o', o,p' and p,p' isomers of dihydroxydiphenylmethane), a condensation product of cresol with formaldehyde (mixture of o,o', o,p' and p,p' isomers of methylhydroxydiphenylmethane), an alkylation product of phenol and of dicyclopentadiene (2,5-bis[hydroxyphenyl]octahydro-4,7-methano-5H-indene), a condensation product of phenol and of glyoxal (tetrakis(4-hydroxyphenyl)ethane), a condensation product of phenol and of a hydroxybenzaldehyde (e.g. tris(4-hydroxyphenyl)methane), 1,1,3-tris(p-hydroxyphenyl)propane, and mixtures of at least two of them, or p-aminophenol, or wherein the compound containing at least one active hydrogen atom is a polyol selected from the group consisting of a polyphenol, a sugar, preferably a sugar selected from the group constituted of isosorbide, isomannide, isoidide and any mixture thereof, a polyol derived from a sugar, an acid polyphenol, any derivative thereof, and any mixture thereof.

15. Process according to any one of claims 1 to 14, wherein the basic agent is selected from the group consisting of alkali and alkaline-earth metal oxides, hydroxides, carbonates, hydrogen carbonates, and mixtures of at least two of them, and wherein the salt is selected from the group consisting of alkali and alkaline-earth metal chlorides and mixtures of at least two of them.
